# EUROPEAN PATENT APPLICATION

(11) **EP 4 014 709 A1**
(43) Date of publication of application: **22.06.2022**
(21) Application number: 21212448.1
(22) Date of filing: 06.12.2021
(51) Int. Cl.: A01D 34/00, A01D 34/74, A01B 63/00, A01B 63/111, A01D 41/14

(54) **AGRICULTURAL APPARATUS WITH CUTTING HEIGHT CONTROL**

(30) Priority: 18.12.2020 GB 202020073
(71) Applicant: AGCO International GmbH, 8212 Neuhausen am Rheinfall (CH)
(72) Inventor: WAEGNER, Christian Kurt, 90537 Feucht (DE); ZWANZGER, Matthias, 90537 Feucht (DE)
(74) Representative: AGCO Intellectual Property Department

(57) **Abstract**

An agricultural apparatus (2) comprising an agricultural vehicle (4) and a trailed mowing apparatus (5) is disclosed. The agricultural vehicle (4) comprises a three point hitch (14) and the trailed mowing apparatus (5) comprises a chassis (22) mounted on the three point hitch (14), the chassis (22) including at least one work unit (8, 10) configured to cut a standing crop and a first sensor (40) for generating signals indicative of an angle of inclination of the at least one work unit. The agricultural apparatus (2) further comprises an electronic control unit (34) and a user terminal (32). The electronic control unit (34) receives the signals indicative of the angle of inclination of the at least one work unit and provides an indication of a cutting height (d) along a cutting edge (28) of the at least one work unit via the user terminal. The electronic control unit (34) allows an operator to automatically or semi-automatically control the cutting height (d) of the at least one work unit.

## Description

### FIELD OF THE INVENTION

The present invention relates to an agricultural apparatus comprising an agricultural vehicle and at least one trailed work unit and in particular to a trailed mowing apparatus for cutting a standing crop such as hay.

### BACKGROUND

It is known to provide an agricultural vehicle with at least one mowing apparatus trailing an agricultural vehicle such as a tractor. The at least one mowing apparatus may conveniently be mounted to a three point hitch provided at the rear of the agricultural vehicle. It is also known to provide a mower combination in which a first mower unit is located ahead of an agricultural vehicle with at least one mowing apparatus trailing the agricultural vehicle. There are a number of reasons why an operator may wish to change or adjust a cutting height of the trailed mowing apparatus. By way of example an operator may move from a first field mowing meadow grass to a second field to mow acre grass. When mowing grass for forage if the turf is dense (as in meadow grass) a cutting height of 6 cm is preferred. However, if there are gaps in the crop (as in acre grass) a cutting height of 8 cm is preferred. This increased height avoids forage contamination and has a positive effect on subsequent regrowth of the acre grass.

Adjusting the cutting height on such trailed mowing apparatus is currently difficult and/or inaccurate from within an operator's cab of the agricultural vehicle. It will be appreciated that this 2 cm height difference cannot be judged visually by an operator seated within the operator's cab. Typically, the operator needs repeatedly to alter the position of the upper link on the rear control and leave the agricultural vehicle to check the effect of the alteration. In order to make an exact adjustment, the operator must measure the height of the cutting edges of the mowing apparatus with the aid of a measuring tool. This is a time-consuming task that may affect the ability to timely cut the crop, for example due to changing weather conditions.

It is an advantage of the present invention that it enables an automatic or semiautomatic change to the cutting height without the need for the operator to exit the agricultural vehicle.

Other advantages of the present invention will become apparent as discussed below.

### SUMMARY OF THE INVENTION

According to a first aspect of the present invention, an agricultural apparatus comprises an agricultural vehicle and a trailed mowing apparatus, the agricultural vehicle comprising a three point hitch and the trailed mowing apparatus comprising a chassis adapted to be mounted on the three point hitch of the agricultural vehicle, the chassis including at least one work unit suitable for cutting a standing crop and a first sensor for generating signals indicative of an angle of inclination of the work unit, in which the agricultural apparatus further comprises an electronic control unit and a user terminal in electronic communication with the electronic control unit, the electronic control unit receiving the signals indicative of the angle of inclination of the work unit.

Preferably, the electronic control unit causes the user terminal to display the angle of inclination of the work unit or a cutting height of the work unit.

Preferably agricultural vehicle further comprises an actuator to control the location of at least one element of the three point hitch.

Preferably the agricultural apparatus further comprises a second sensor for generating signals indicative of a pitch angle of the agricultural vehicle.

Preferably, the user terminal is part of the agricultural vehicle.

A method of operation of an agricultural apparatus according to the first aspect of the invention, the method comprising:
the first sensor communicating signals indicative of the angle of inclination of the work unit to the electronic control unit;
the electronic control unit determining a cutting height of the at least one work unit from the signals indicative of the angle of inclination of the work unit; and the electronic control unit communicating with the user terminal to cause the user terminal to communicate the angle of inclination of the work unit and/or the cutting height of the at least one work unit to an operator.

Preferably the electronic control unit determines whether the cutting height of the at least one work unit is at a desired value and as required causes operation of the actuator to alter the angle of inclination of the work unit and so the cutting height of the at least one work unit.

Preferably, the electronic control unit causes the user terminal to display the altered angle of inclination or an altered cutting height of the work unit.

Preferably, the electronic control unit also causes the user terminal to issue an audible alert to an operator indicating that the angle of inclination of the work unit or the cutting height of the work unit has been changed.

Preferably, the electronic control unit additionally receives signals indicative of a pitch angle of the agricultural vehicle, the electronic control unit determining the cutting height of the at least one work unit from the signals indicative of the pitch angle of the agricultural vehicle and the signals indicative of the angle of inclination of the work unit.

According to a third aspect of the invention, a computer readable program comprising instructions which, when the program is executed by a computer causes the agricultural implement of the first aspect of the invention to implement the method of the second aspect of the invention.

### BRIEF DESCRIPTION OF THE DRAWINGS

The invention will now be described, by way of example only, with reference to the accompanying drawings, in which:
Figure 1 shows a plan view of an agricultural apparatus for use in the present invention;
Figure 2 shows a schematic view of elements of an agricultural apparatus for use in the present invention;
Figure 3 shows a schematic side view of a rear portion of an agricultural apparatus provided with a trailed work unit with the work unit in a first position;
Figure 4 shows a schematic side view of a rear portion of the agricultural apparatus

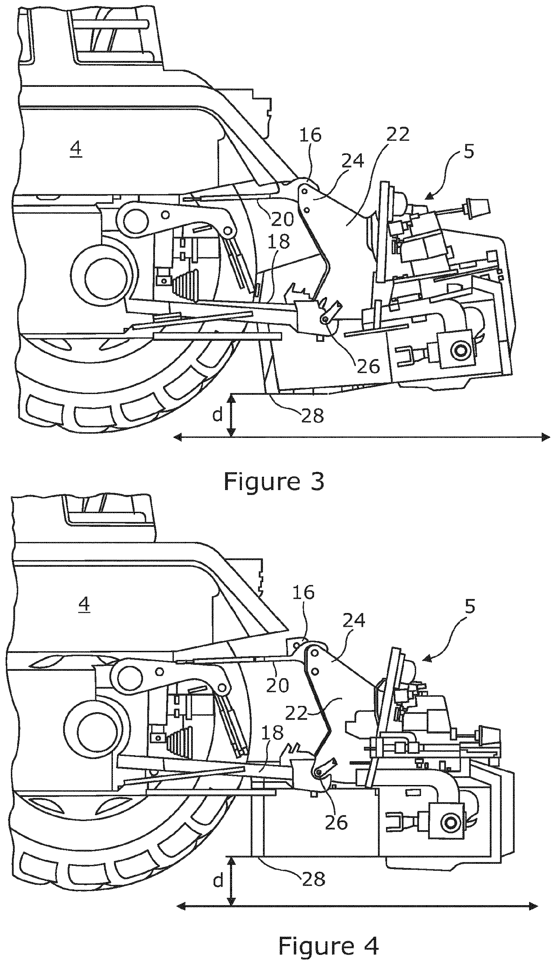

Figure 3 with the work units in a second position;

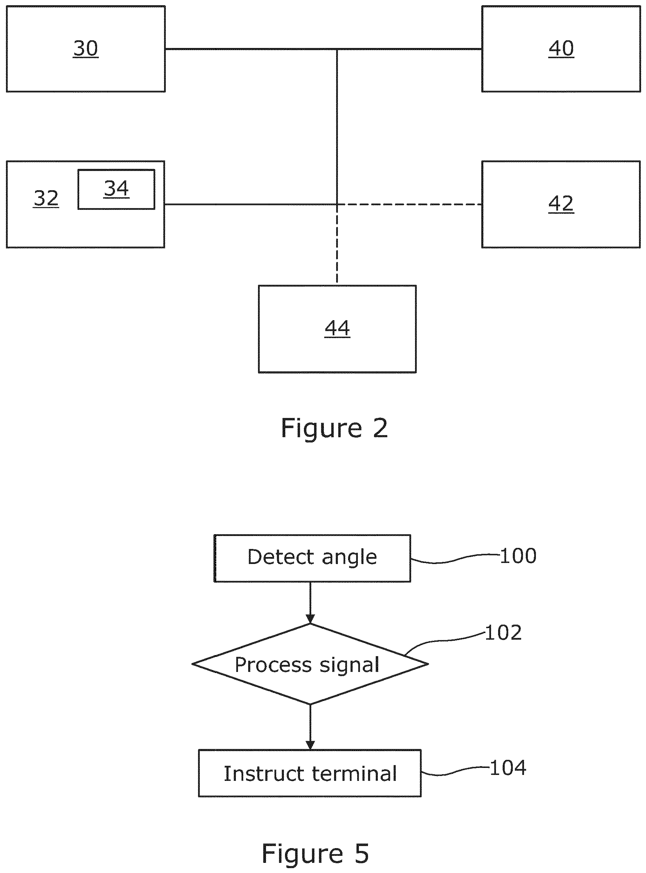

Figure 5 shows a flow diagram in relation to operation of a first embodiment of an agricultural apparatus in accordance with the present invention;

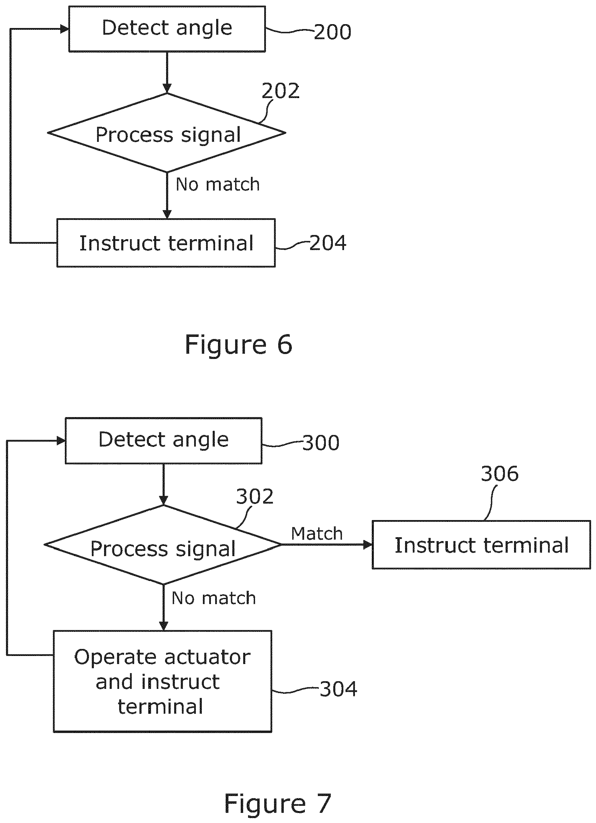

Figure 6 shows a flow diagram in relation to operation of a second embodiment of an agricultural apparatus in accordance with the present invention; and
Figure 7 shows a flow diagram in relation to operation of a third embodiment of an agricultural apparatus in accordance with the present invention.

### DETAILED DESCRIPTION OF SPECIFIC EMBODIMENTS OF THE INVENTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description.

Reference to terms such as longitudinal, transverse, horizontal and vertical are made with respect to a longitudinal vehicle axis which is parallel to a normal forward direction of travel of the agricultural apparatus travelling over level ground.

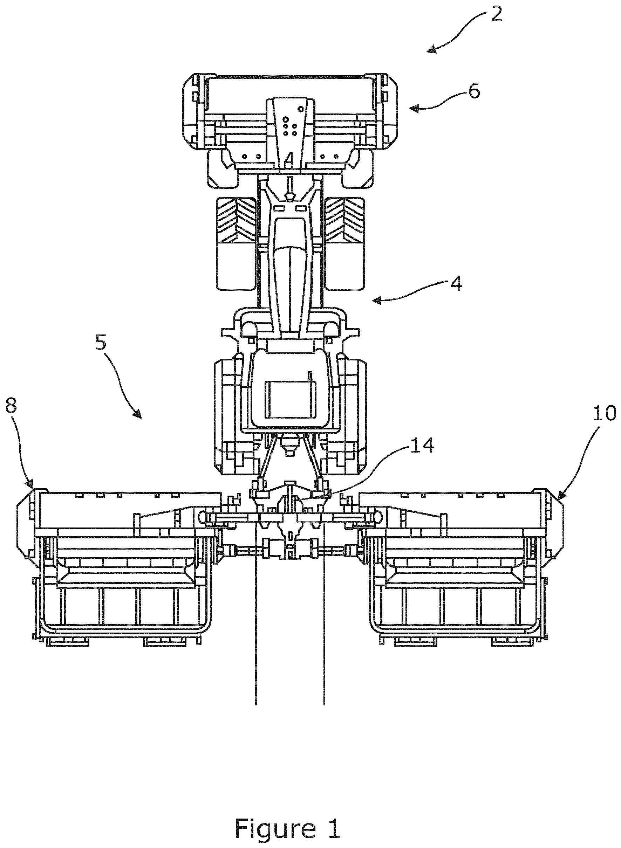

With reference to Figure 1, a plan view of an example agricultural apparatus 2 for use in the present invention is shown.

An agricultural apparatus 2 comprises an agricultural vehicle 4 such as a tractor and a a number of work units 6,8,10 suitable for cutting standing crop, the work units 6,8,10 being connected to the agricultural vehicle. The work units include a front work unit 6 located to the front of the agricultural vehicle 4 and a trailed implement 5 incorporating two lateral work units 8,10 located behind and to the sides of the front work unit 6, each of the work units 6,8,10 depositing cut crop as a swath. The front work unit 6 is conveniently mounted on a front hitch 12 of the agricultural vehicle 4. The two lateral work units 8,10 are conveniently mounted to a rear three-point hitch 14 of the agricultural vehicle 4. In a preferred embodiment the work units comprise mowing units. While the invention is illustrated in relation to an arrangement in which a front unit is connected to the front hitch and two rear lateral units are connected to the rear hitch, it will be understood that other arrangements, for example, a trailed implement comprising a single work unit suitable for cutting standing crop attached to the rear hitch may be used in the present invention. An operator can control operation of the mowing units 6,8,10 by use of a suitable user terminal 32. Preferably the user terminal 32 is within an operator's cab of the agricultural vehicle.

The rear three-point hitch 14 comprises an upper linkage 16 and left and right lower linkages 18. In the illustrated embodiment only one side of the agricultural vehicle is shown, but it will be understood that the arrangement is symmetrical about a longitudinal axis of the agricultural vehicle. The upper linkage may be displaced horizontally with respect to the agricultural vehicle by an actuator, preferably a hydraulic actuator. The rear work unit or work units are mounted on a chassis. The chassis is provided with three mounting points for engagement with the corresponding linkages of the three-point hitch. Again, in the illustrated embodiment only one side of the trailed implement is shown, but it will be understood that the arrangement is symmetrical about a longitudinal axis of the trailed implement. The rear work units are moveable between a deployed working position in which the work units may be used to cut crop and a raised transport position where the work units are raised to a vertical or substantially vertical position behind the agricultural vehicle 4. It will be understood that a cutting edge 28 is defined by a leading edge of the work units as the crop is cut, and a cutting height d is the vertical height of the cutting edge 28 above the ground.

By controlling the actuator 20, the upper hitch linkage 16 can be moved horizontally causing the chassis 22 and the associated work unit(s) to pivot about the lower hitch linkages 18. By extending the actuator 20, the cutting height d of the work unit(s) can be raised. It can be seen that there is a mathematical relationship between the height of the cutting edge 28 and the extension of the actuator 20.

The user terminal 32 communicates with an electronic control unit 34. The electronic control unit 34 may provide signals to control operation of the agricultural vehicle 4 and provide signals to control operation of the agricultural work unit. Conveniently the signals are provided by way of a suitable data communication network 38 such as one compliant with the ISOBUS standard (a network in conformance to ISO 11783).

The electronic control unit 34 may conveniently comprise a single processor located on the agricultural vehicle or its functions may be split between a processor located on the agricultural vehicle and one or more additional processors located on the one or more agricultural work units, the additional processor(s) being in electronic communication with the first processor.

The electronic control unit 34 is also able to access a suitable memory 36. The memory 36 may take any suitable form and is in electronic communication with the electronic control unit 34.

A first inclination sensor 40 is conveniently mounted on the chassis 22. Alternatively, the first inclination sensor 40 may be mounted on the rear work unit or one of the work units. The first inclination sensor 40 measures directly or indirectly the angle of inclination of the work unit when the work unit is in the working position. Since the dimensions of the chassis and the work unit do not change and the position of the cutting edge of the work units is known in relation to a vertical position of the rear three point hitch 14, that is when all three of the linkages 16,18 of the rear three point hitch 14 are vertically aligned, the height d of the cutting edge can be determined from signals provided by the first inclination sensor 40.

The relationship between the signals from the first inclination sensor 40 and the cutting height d may be stored in any suitable manner, for example by way of lookup table or the like, in the memory 36 of the electronic control unit 34. Alternatively since the relationship between the cutting height d and angle of inclination is known, the cutting height d may be calculated "on the fly" from the signals received from the first inclination sensor 40 by a program accessed from the memory 36 of the electronic control unit 34.

The first inclination sensor 40 sends signals indicative of the angle of inclination to the electronic control unit 34 (step 100, Figure 5). The electronic control unit 34 determines the cutting height d of the cutting edge, for example by making a calculation or by reference to a look up table, or by any other suitable method (step 102).

The electronic control unit 34 preferably signals the user terminal 32 to cause the cutting height and/or the angle of inclination of the work unit to be communicated to the operator (step 104). Conveniently, the user terminal 32 displays the cutting height d and/or the angle of inclination of the work unit.

As a calibration step, once the trailed implement 5 has been connected to the agricultural vehicle 4 an operator measures the cutting height d and enters this information into the user terminal 32. The electronic control unit 34 is then able to set this cutting height d against the angle of inclination indicated by the first inclination sensor 40. The operator can then use the user terminal 32 to alter the desired cutting height of the agricultural work unit for the task in hand.

In a first embodiment, the operator controls the actuator 20 using the user terminal 32 to achieve a desired cutting height. In this case, as the actuator 20 is controlled by the operator, the first inclination sensor 40 sends signals indicative of the angle of inclination to the electronic control unit 34 (step 200, Figure 6). The electronic control unit 34 processes the signals from the first inclination sensor 40 indicative of the angle of inclination (step 202) and determines the cutting height d of the cutting edge, for example by making a calculation or by reference to a look up table, or by any other suitable method. The electronic control unit 34 then causes the user terminal to signal the cutting height d, for example by display of a numerical value on a display of the user terminal 32 (step 204). Once the desired cutting height has been achieved the operator can cease control of the actuator 20 and proceed.

In a second embodiment, the operator may input a desired cutting height to the electronic control unit 34 using the user terminal 32 and the electronic control unit then causes the actuator 20 to operate and thereby change the angle of inclination. In this case, as the actuator 20 is controlled by the operator, the first inclination sensor 40 sends signals indicative of the angle of inclination to the electronic control unit 34 (step 300, Figure 7). The electronic control unit 34 processes the signals from the first inclination sensor 40 indicative of the angle of inclination (step 302) and determines the cutting height d of the cutting edge, for example by making a calculation or by reference to a look up table, or by any other suitable method. If the determined cutting height does not match the desired cutting height, the electronic control unit 34 then causes the user terminal to signal the cutting height d, for example by display of a numerical value on a display of the user terminal 32, such that an operator can visualise the changing cutting height d or to signal that the desired cutting height has not yet been achieved (step 304). Once the desired cutting height has been achieved, the electronic control unit 34 then causes the user terminal to signal that the cutting height d now matches the desired cutting height (step 306) for example by providing an audible or visual indication.

In a further embodiment, a sensor 42 is provided to measure the height of the agricultural vehicle above the ground and/or the height of the hitch above the ground. The load of the trailed implement may cause the height of the rear hitch 14 to be displaced. The degree of this displacement will depend upon many factors, including for example the tyre pressure of the agricultural vehicle and the weight of a given trailed implement. By using the signals from such a sensor, the height d of the cutting edge 28 may more accurately be determined and so the need to conduct the calibration step discussed above before mowing is avoided.

In a further embodiment, a second inclination sensor 44 is provided to measure a pitch angle of the agricultural vehicle, that is the inclination of the agricultural vehicle along its longitudinal axis with respect to a transverse axis. The second inclination sensor 44 is conveniently provided on the agricultural vehicle.

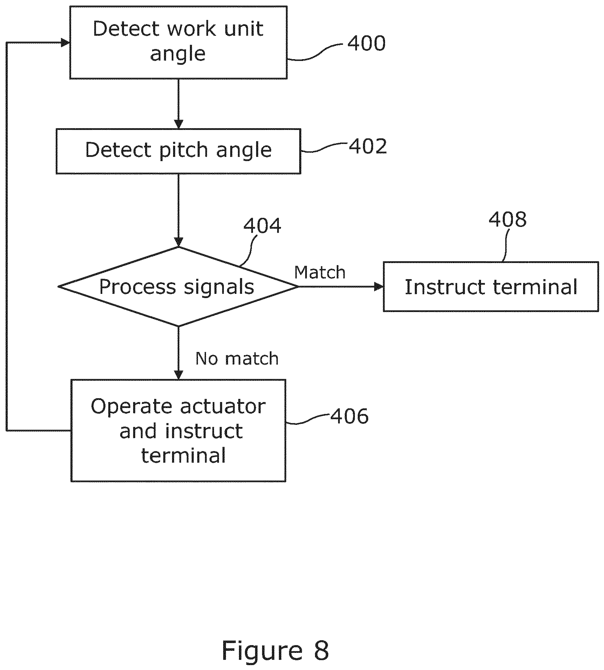

On movement over uneven or hilly ground, the relationship between the height of the rear hitch 14 and the cutting height d changes from that over even ground. However, by knowing the both the angle of inclination of the work unit(s) and the pitch angle of the agricultural vehicle, this changed relationship can be predicted and accommodated. In particular, the electronic control unit can be configured such that in addition to receiving signals indicative of the angle of inclination of the at least one work unit (step 400, Figure 8), the electronic control unit 34 may also receive signals indicative of the pitch angle of the agricultural vehicle (step 402). On receiving signals indicating that the agricultural vehicle has moved from a level orientation (step 404), the electronic control unit 34 calculates the desired angle of inclination of the at least one work unit to maintain the desired cutting height and causes the actuator 20 to operate to adjust the cutting height d in an appropriate manner to maintain the desired cutting height (step 406). Conveniently the electronic control unit 34 also sends signals to the user terminal 32 to inform the operator of this adjustment.

If the signals indicative of the pitch angle of the agricultural vehicle, do not indicate a change from movement over level ground, the electronic control unit 34 continues to instruct the user terminal 33 to communicate the unchanged cutting height d of the at least one work unit (step 408).

From reading the present disclosure, other modifications will be apparent to persons skilled in the art. Such modifications may involve other features which are already known in the field of agricultural towed mowing apparatus and component parts therefore and which may be used instead of or in addition to features already described herein.

## Claims

1. An agricultural apparatus comprising an agricultural vehicle and a trailed mowing apparatus, the agricultural vehicle comprising a three point hitch and the trailed mowing apparatus comprising a chassis adapted to be mounted on the three point hitch of the agricultural vehicle, the chassis including at least one work unit suitable for cutting a standing crop and a first sensor for generating signals indicative of an angle of inclination of the work unit, in which the agricultural apparatus further comprises an electronic control unit and a user terminal in electronic communication with the electronic control unit, the electronic control unit receiving the signals indicative of the angle of inclination of the at least one work unit.

2. An agricultural apparatus according to claim 1, **characterised in that** the electronic control unit causes the user terminal to display the angle of inclination of the work unit or a cutting height of the at least one work unit.

3. An agricultural apparatus according to claim 1 or claim 2, **characterised in that** the agricultural vehicle further comprises an actuator to control the location of at least one element of the three point hitch.

4. An agricultural apparatus according to any of claims 1 to 3, **characterised in that** the agricultural apparatus further comprises a second sensor for generating signals indicative of a pitch angle of the agricultural vehicle.

5. An agricultural apparatus according to any of claims 1 to 3, **characterised in that** the user terminal is part of the agricultural vehicle.

6. A method of operation of an agricultural apparatus comprising an agricultural vehicle and a trailed mowing apparatus, the agricultural vehicle comprising a three point hitch and the trailed mowing apparatus comprising a chassis adapted to be mounted on the three point hitch of the agricultural vehicle, the chassis including at least one work unit suitable for cutting a standing crop and a first sensor for generating signals indicative of an angle of inclination of the at least one work unit, in which the agricultural apparatus further comprises an electronic control unit and a user terminal in electronic communication with the electronic control unit, the electronic control unit receiving the signals indicative of the angle of inclination of the at least one work unit, the method comprising:
the first sensor communicating signals indicative of the angle of inclination of the at least one work unit to the electronic control unit;
the electronic control unit determining a cutting height of the at least one work unit from the signals indicative of the angle of inclination of the work unit; and
the electronic control unit communicating with the user terminal to cause the user terminal to communicate the angle of inclination of the at least one work unit and/or
the cutting height of the at least one work unit to an operator.

7. A method according to claim 6, **characterised in that** the electronic control unit determines whether the cutting height of the at least one work unit is at a desired value and as required causes operation of the actuator to alter the angle of inclination of the at least one work unit and so the cutting height of the at least one work unit.

8. A method according to claim 7, **characterised in that** the electronic control unit causes the user terminal to display the altered angle of inclination or an altered cutting height of the at least one work unit.

9. A method according to claim 8, **characterised in that** the electronic control unit also causes the user terminal to issue an audible alert to an operator indicating that the angle of inclination of the at least one work unit or the cutting height of the at least one work unit has been changed.

10. A method according to any of claims 6 to 9, **characterised in that** the electronic control unit additionally receives signals indicative of a pitch angle of the agricultural vehicle, the electronic control unit determining the cutting height of the at least one work unit from the signals indicative of the pitch angle of the agricultural vehicle and the signals indicative of the angle of inclination of the at least one work unit.

11. A computer readable program comprising instructions which, when the program is executed by a computer causes the agricultural implement of claim 1 to claim 5 to implement the method of any of claim 6 to claim 10.
